# EUROPÄISCHE PATENTSCHRIFT

(11) **EP 1 348 345 B1**
(45) Veröffentlichungstag und Bekanntmachung des Hinweises auf die Patenterteilung: **13.09.2006**
(21) Anmeldenummer: 02007424.1
(22) Anmeldetag: 28.03.2002
(51) Int. Cl.: A23L 3/00, B65G 47/53

(54) **Vorrichtung zum Pasteurisieren**
Pasteurizing device
Dispositif de pasteurisation

(43) Veröffentlichungstag der Anmeldung: 01.10.2003
(73) Patentinhaber: SANDER HANSEN A/S, DK-2600 Glostrup (DK)
(72) Erfinder: Ahlberg, Peter, 3140 Alsgârde (DK)
(74) Vertreter: Grünecker, Kinkeldey, Stockmair & Schwanhäusser Anwaltssozietät

(56) Entgegenhaltungen:
- DE-A- 2 508 275
- DE-A- 2 633 384
- US-A- 2 596 404
- US-A- 2 953 234

## Beschreibung

Die vorliegende Erfindung betrifft einen Pasteur nach dem Oberbegriff des Anspruchs 1.

Pasteure dieser Art werden z.B. in der Lebensmittelindustrie zum Pasteurisieren von Produkten, beispielsweise gefüllten und verschlossenen Glasflaschen, eingesetzt.

Dabei wird das Produkt auf einem Transportförderer, der üblicherweise mehrere Meter breit ist, langsam durch einen Tunnel hindurchgefahren, in dem das Produkt erhitzt und wieder abgekühlt wird.

Die Produkte werden dem Pasteur üblicherweise auf einem schnell laufenden, deutlich schmaler als der langsamer laufende Transportförderer ausgebildeten Zuförderer zugeführt und von einem schnell laufenden Abförderer nach der Pasteurisierung wieder abgeführt.

Bekannt ist ein gattungsgemässer Pasteur aus der DE2633384. Zwischen dem Zuförderer und dem Transportförderer ist eine Überschubfläche in der Art einer Blechplatte o.dgl. vorgesehen, so dass die Produkte mit einem Linearschieber von dem Zuförderer über die Platte auf den Transportförderer des Pasteurs geschoben werden können.

Während in der DE 2633384 immer nur eine Reihe von Produkten zugeführt wird, sind auch Lösungen bekannt, bei denen die Produkte auf dem Zuförderer in mehreren Reihen nebeneinander zugeführt werden und dabei die vorlaufenden Flaschen in den Pasteur hineindrücken, so dass kein Schieber benötigt wird.

Als nachteilig bei derartigen Pasteuren hat sich herausgestellt, dass dann, wenn beispielsweise bei einem Produktwechsel keine Flaschen mehr zugefördert werden, auf der Platte zwischen dem Zuförderer und dem Transportförderer des Pasteurs Produkte verbleiben können, die dann von Hand nachgeschoben oder eben doch wieder mit einem Schieber über die Platte geschoben werden müssen.

Üblicherweise hat die Platte eine Breite von mehr als einem halben Meter, um die baulich bedingte Lücke zwischen dem Zuförderer und dem Transportförderer des Pasteurs zu überbrücken.

Darüber hinaus ist aus der DE 2508 275 eine rechtwinklige und niveaugleiche Anordnung von ein- oder mehrbahnigen Plattenbandförderem bekannt. Bei einer derartigen Anordnung werden Flaschen oder Dosen von einem Plattenbandförderer auf einen anderen Plattenbandförderer transportiert, wobei der zweite Plattenbandförderer rechtwinklig zu dem ersten Plattenbandförderer angeordnet ist. Beide Förderer haben, im Gegensatz zu dem Transportförderer eines Pasteurs und dem Zuförderband, dieselbe Breite. Darüber hinaus werden sie auch mit gleicher Geschwindigkeit betrieben, wodurch sich automatisch eine gute Übergabe ohne die Gefahr eines Kippens durch Abbremsen der Flaschen oder Dosen ergibt. Um die Flaschen oder Dosen von dem einen auf das andere Plattenförderband zu bewegen, ist an dem Aufbau des Plattenbandzuförderers eine Leiste angeordnet, mit der die Flaschen bzw. Dosen über den Spalt zwischen den beiden Förderern hinwegtransferiert werden können. An der Unterseite des Zuförderers ist ein Hohlraum ausgebildet, in dem sich ein Teil der Umlenkwalze des Abförderers befindet. Die Leiste hat etwa eine Breite, die weniger als die Hälfte des Durchmessers einer zu transportierenden Flasche ist. Ein Schieber entfällt hierbei.

Aus der US 2,953,234 ist ein Transport und Anordnungssystem für Behälter bekannt.

Aufgabe der vorliegenden Erfindung ist es, einen Pasteur zu schaffen, der einen Transportförderer haben kann, der wenigstens ein mehrfaches der Breite eines Zuförderers und eine wesentlich geringere Geschwindigkeit als der Zuförderer hat, bei dem aber trotzdem das Überführen auch dann, wenn wenig oder vorübergehend keine Produkte, z.B bei einem Produktwechsel, anstehen, störungsfrei stattfinden kann.

Die Aufgabe wird mit einem Pasteur gemäß Anspruch 1 gelöst. Bevorzugte Ausführungsformen sind in den abhängigen Ansprüchen beschrieben.

Der erfindungsgemäße Pasteur zeichnet sich dadurch aus, dass durch die Anordnung des Zuförderers bzw. des Abförderers die Überschubfläche so kurz gehalten werden kann, dass keine oder wenn überhaupt nur wenige Produkte bei einem Produktwechsel auf der Überschubfläche verbleiben.

Eine besonders bevorzugte Ausführungsform ist dadurch ausgezeichnet, dass ein Schieber vorgesehen ist, mit dem Produkte, die auf der Übelrschubfläche beispielsweise bei einem Produktwechsel verbleiben, von der Überschubfläche auf den Transportförderer oder auf den Abförderer geschoben werden können. Vorteilhaft ist hierbei eine Drehschieberausführung. Ein Drehschieber arbeitet, im Vergleich zu einem Linearschieber, sehr zuverlässig und wenig fehleranfällig. Dadurch, dass nur eine Reihe von Produkten über einen recht kurzen Weg verschoben wird, kann auch ein Drehschieber an die Produkte immer in etwa in der selben Höhe angreifen, falls das Angreifen mit dem Schubelement, beispielsweise einer Stange, in einem auf der Kreisbahn der Drehbewegung tiefliegenden Kreissegment erfolgt, da das Schubelement dort bei einer Drehbewegung nur wenig in seiner Höhe variiert.

Eine Ausführungsform eines Pasteurs gemäß der vorliegenden Erfindung wird anhand der anliegenden Figuren erläutert. Dabei zeigt:
Fig. 1 eine perspektivische Darstellung eines Pasteurs und
Fig. 2 eine schematische Schnittzeichnung eines Pasteurs.

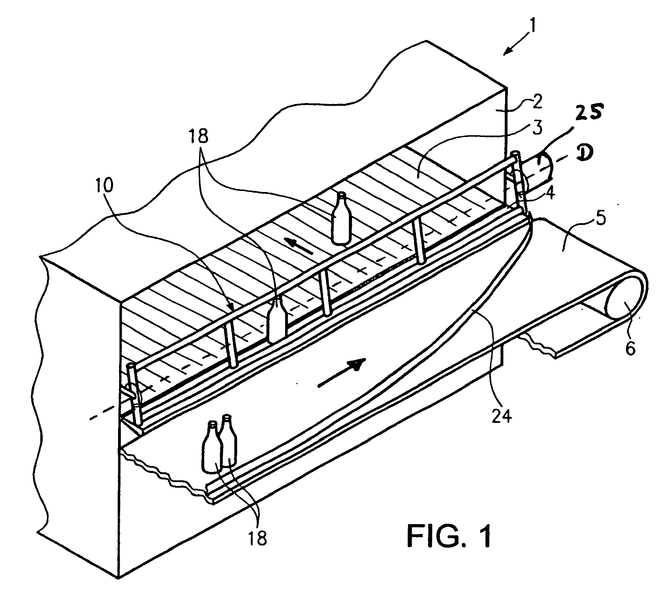

In Fig. 1 ist ein Pasteur 1 mit einem Tunnel 2 gezeigt, in dem Produkte 18 pasteurisiert werden können. Die Produkte 18, die wie in Fig. 1 dargestellt, beispielsweise Flaschen sein können, werden auf einem Transportförderer 3 stehend durch den Pasteurtunnel 2 transportiert.

Am Eingang des Pasteurs 1 ist stimseitig rechtwinkelig vor dem Transportförderer ein Zuförderer 5 angeordnet, der im Vergleich zum Transportförderer 3 des Pasteurs wesentlich schmaler ausgebildet ist und daher mit einer deutlich höheren Geschwindigkeit betrieben werden muss als der Transportförderer 3 des Pasteurs 1. Der Zuförderer 5, der beispielsweise als Förderband, Plattenförderband etc. ausgebildet ist, kann die Produkte 18 dem Eingang des Pasteurs 1 zuführen. Hierzu ist über dem Zuförderer 5 ein Geländer 24 angeordnet, das einlaufende Produkte 18 dem Eingang des Pasteurs 1 zuführt. Anders als in Figur 1 - aus Übersichtlichkeitsgründen - dargestellt ist in der Regel beim Betrieb der gesamte Bereich des Zuförderers 5 auf der Seite des Geländers 24, auf der der Pasteur 1 liegt, mit Produkten 18 gefüllt. Dadurch werden die Produkte 18 in den Eingang des Pasteurs 1 von den nachfolgenden Flaschen gedrückt.

Zwischen dem Transportförderer 3 und dem Zuförderer 5 ist eine Überschubfläche 4 vorgesehen, mit der ein kleiner Spalt zwischen dem Zuförderer 5 und dem Transportförderer 3 des Pasteurs 1 überbrückt wird.

Produkte 18, die auf der Überschubfläche 4 verbleiben, falls beispielsweise keine Produkte 18 mehr auf dem Zuförderer 5 nachgeführt werden, können mit dem Drehschieber 10 auf den Transportförderer 3 geschoben werden. Dadurch, dass die Überschubfläche 4 so kurz ausgebildet ist (Breite b beträgt vorzugsweise zwischen 5 und 10 cm), ist es möglich, einen sich drehenden Schieber 10 zu verwenden, der zum Schieben der Produkte 18 in einer optimalen Höhe angreift. Durch das Angreifen in optimaler Höhe wird ein Kippen vermieden.

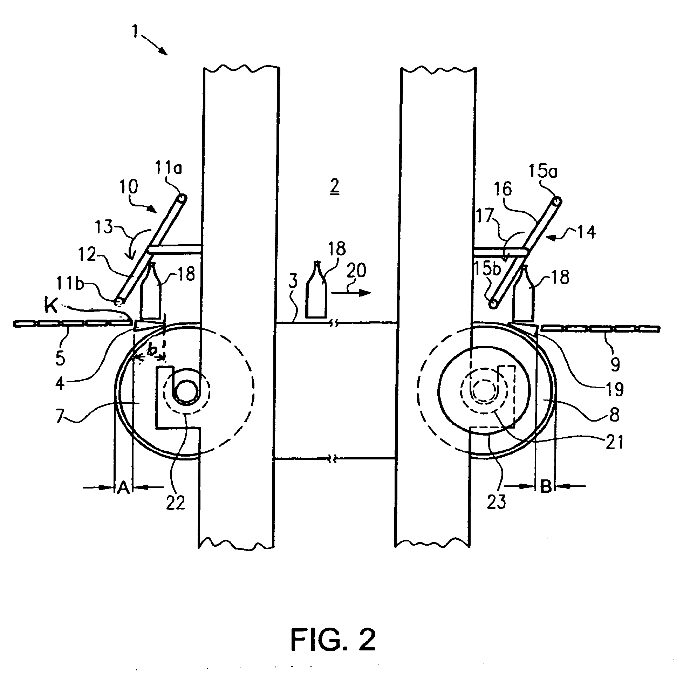

In Fig. 2 ist eine Schnittzeichnung des Pasteurs 1 gezeigt. Links in Fig. 2 ist der Zuförderer 5 zu erkennen. Niveaugleich mit der Oberfläche des Zuförderers 5 ist die Überschubfläche 4 neben dem Zuförderer 5 angeordnet und leicht in Richtung des Pasteurs 1 geneigt ausgebildet.

Der Pasteur 1 weist einen endlos umlaufenden Transportförderer 3 auf, der um Walzen 7, 8 geführt wird. Die Walzen 7, 8 sind an der Außenseite von Säulen in Lagern 21, 22 gelagert. Rechts in Fig. 2 ist eine Überschubfläche 19 dargestellt, die leicht nach außen geneigt ist. Im Anschluss an die Überschubfläche 19 ist der Abförderer 9 dargestellt, der beispielsweise als Förderband, Plattenförderband etc. ausgebildet ist, mit dem Produkte 18 von dem Pasteur 1 abgefördert werden können.

Sowohl der Zuförderer 5 als auch der Abförderer 9 fördern Produkte 18 senkrecht zu der Zeichenebene in Fig. 2.

Die stationäre Überschubfläche 4 ist in Transportrichtung 20 des Transportförderers 3 so kurz ausgestaltet, dass die in Fig. 2 rechte, also die dem Transportförderer 3 zugewandte, Begrenzung des Zuförderers 5 oberhalb der Kontur der Umlenkwalze 7 verlaufend angeordnet ist. Die rechte Begrenzung ragt hierbei um den Betrag A in Richtung des Transportförderers 3 über die Kontur der Walze 7 hinein, mit anderen Worten ist die Breite b der Überschubfläche kleiner als der Radius der Umlenkwalzen. Ebenso steht die linke, also die dem Transportförderer 3 zugewandte Begrenzung des Abförderers 9 um den Betrag B über die Kontur der Walze 8 in Richtung des Transportförderers 3 hinein.

Auf den in Transportrichtung 20 kurzen Überschubflächen 4, 19 findet jeweils etwa eine Reihe von Produkten 18 Platz. Oberhalb der Überschubflächen 4, 19 ist jeweils ein Drehschieber 10, 14 angeordnet, um die Produkte 18, die auf der Überschubfläche 4, 19 verbleiben können, zu schieben.

Die Überschubflächen 4, 19 können leicht geneigt angeordnet sein, um ein Rutschen der Flaschen zu erleichtern bzw. zu ermöglichen.

Die folgenden Ausführungen über den Zutransportschieber 10 gelten entsprechend auch für den Abtransportschieber 14.

Der Zutransportschieber 10 besteht aus zwei langen parallelen Stangen 11a und 11b, die mittels Querstreben 12 voneinander beabstandet angeordnet sind. In Fig. 2 dreht sich der Drehschieber 10 um eine Achse, die zwischen den beiden parallelen langen Stangen 11a und 11b liegt. Jedoch ist auch eine Drehung um beispielsweise die in Fig. 2 oben dargestellte Stange 11a denkbar oder auch um jede andere geeignete Drehachse.

Die Drehachse des Drehschiebers 10 ist vorteilhafterweise, wie in Fig. 2 dargestellt, mittig über der Überschubfläche 4 angeordnet, kann jedoch auch näher oder weiter entfernt von dem Pasteur 1 angeordnet sein.

Vorteilhafterweise kann der Drehschieber 10 in eine solche Ruhestellung gebracht werden, dass sich die beiden langen parallelen Stangen 11a und 11b oberhalb der Produkte 18 befinden und so den freien Lauf der Produkte 18 im Regelbetrieb nicht stören. Dazu liegt der Drehpunkt der Drehung 13 vorteilhafterweise oberhalb der Bahn der Produkte 18. Der Drehpunkt kann jedoch auch im Bereich der Bahn der Produkte 18 liegen. Dadurch ist eine kompakte Bauweise des Schiebers 10, der Querstangen 12 aufweist, die kürzer als die Höhe eines Produkte 18 ist, möglich. Der Schieber 10 kann auch insgesamt höhenverstellbar ausgebildet sein.

Während in Fig. 2 zwei lange parallele Stangen 11a und 11b vorgesehen sind, kann auch nur eine einzelne Stange 11b vorgesehen sein, um die Produkte 18 zu schieben. Dann kann auch mit einem kompakt gebauten Schieber 10 die Stange 11b in eine Position oberhalb der Bahn der Produkte 18 gefahren werden, ohne dass die Stange 11a, die ja entfällt, die Produkte im Regelbetrieb behindert. Der Schieber 10 führt hierbei pro Arbeitshub eine 360° - Rotation aus.

Falls zwei Stangen 11a, 11b vorgesehen sind, können diese abwechselnd eingesetzt werden, wobei der Schieber dann pro Arbeitshub eine 180°- Rotation ausführt.

Durch eine Drehbewegung 13 des Drehschiebers 10 greift die Stange 11b, wie in Fig. 2 dargestellt, an dem Produkt 18 an und schiebt es so von der Überschubfläche 4 auf den Transportförderer 3.

Ebenso schiebt der Abtransportschieber 14 ein Produkt 18 von der Überschubfläche 19 auf den Abförderer 9.

Bei der in Fig. 2 dargestellten Ausführungsform ist an der Achse der Walze 8 eine Antriebseinrichtung 23 angeordnet, die beispielsweise ein Motor oder ein Getriebe sein kann. Die Antriebseinrichtung 23 ist so ausgestaltet, dass sie einen kleineren Durchmesser als die Walze 8 hat, so dass die Bewegung des Abförderers 9 nicht behindert wird.

Die Schieber 10,14 können elektromotorisch, z.B mit einem Getriebemotor 25, und/oder mit einem Stellmotor und/oder pneumatischen und/oder hydraulisch antreibbar sein.

Die Schieber können weiterhin mit einer Auslösevorrichtung in Bewegung gesetzt werden. Dies kann beispielsweise ein Schalter sein, mit dem das Bedienpersonal die Bewegung des Schiebers auslöst, um die Produkte auf der Überschubfläche zu Schieben. Auch kann ein Sensor vorgesehen sein, mit dem das Ausbleiben von nachfolgenden Flaschen detektiert wird, und dann die Bewegung automatisch ausgelöst wird. Hierbei kann beispielsweise eine Lichtschranke vorgesehen sein, die den Eingang des Pasteurs oder den Zuförderer auf einlaufende Flaschen untersucht.

Die Auslösevorrichtung kann auch ein Signal von einer zentralen Produktionssteuerung empfangen, mit der die Bewegung des Schiebers angeordnet wird.

## Patentansprüche

1. Pasteur (1) mit:
einem über Umlenkwalzen (7,8) geführten, endlos umlaufenden Transportförderer (3) zum Transport der zu pasteurisierenden Produkte (18) durch den Pasteur (1),
einem im Wesentlichen quer zur Transportrichtung des Transportförderers (3) ausgerichteten, eine geringere Breite als der Transportförderer (3) aufweisenden Zuförderer (5) und/oder Abförderer (9) zum Zu- bzw. Abtransport der Produkte (18) stirnseitig vor den bzw. von dem Transportförderer (3) und
einer Überschubfläche (4,19) zum Überbrücken eines Abstandes zwischen der Förderfläche der Zuförderers (5) und/oder Abförderers (9) und der Förderfläche des Transportförderers (3),
**dadurch gekennzeichnet, dass**
der Zuförderer (5) und/oder Abförderer (9) so nahe an der Stirnseite des Transportförderers (3) verlaufend angeordnet ist, dass seine dem Transportförderer (3) zugewandte seitliche Begrenzung (K) oberhalb der Kontur der Umlenkwalze (7,8) verlaufend angeordnet ist so daß sich beide, in vertikaler Richtung gesehen, überlappen und dass ein Zutransportschieber (10) und/oder ein Abtansportschieber (14) zum Schieben von Produkten (18) auf der Überschubfläche (4, 19) vorgesehen ist, der als Drehschieber ausgebildet ist, dessen Drehachse im wesentlichen horizontal liegt.

2. Pasteur (1) nach Anspruch 1, **dadurch gekennzeichnet, dass** die Überschubfläche (4,19) in der Transportrichtung (20) des Transportförderers (3) etwa eine Breite (b) wie eine Abmessung des Produkts (18) in Richtung der Transportrichtung (20) des Transportförderers (3) hat.

3. Pasteur (1) nach einem der Ansprüche 1 oder 2, **dadurch gekennzeichnet, dass** die Überschubfläche (4,19) in der Transportrichtung (20) des Transportförderers (3) eine Breite (b) zwischen 20 cm und 2 cm, bevorzugterweise zwischen 15 cm und 3 cm und noch bevorzugterweise zwischen 10 cm und 5 cm aufweist.

4. Pasteur (1) nach einem der Ansprüche 1 bis 3, **dadurch gekennzeichnet, dass** die Überschubfläche (4,19) in Transportrichtung leicht nach unten geneigt ist.

5. Pasteur (1) nach einem der Ansprüche 1 bis 4, **dadurch gekennzeichnet, dass** der Drehschieber (2) mindestens eine, vorzugsweise mindestens eine zweite, parallele. Stange (11a, 11b, 15a, 15b) aufweist, die im Wesentlichen quer zur Transportrichtung (20) des Transportförderers (3) angeordnet ist und um eine im wesentlichen horizontale Achse (D) drehbar ist.

6. Pasteur (1) nach Anspruch 5, **dadurch gekennzeichnet, dass** die parallele Stange (11a, 11b, 15a, 15b) durch mindestens eine Querstrebe (12, 16) gehalten wird.

7. Pasteur nach einem der Ansprüche 1 bis 6, **dadurch gekennzeichnet, dass** der Zutransportschieber (10) und/oder der Abtransportschieber (14) elektromotorisch und/oder mit einem Stellmotor und/oder pneumatischen und/oder hydraulisch antreibbar ist.

8. Pasteur nach einem der Ansprüche 1 bis 7, **dadurch gekennzeichnet, dass** eine Auslösevorrichtung zum Auslösen der Bewegung des Zutransportschiebers (10) und/oder der Abtransportschiebers vorgesehen ist.

9. Pasteur nach einem der Ansprüche 5 bis 8, **dadurch gekennzeichnet, dass** die Achse (D) mittig zwischen den zwei parallelen Stangen (11a, 11b, 15a, 15b) verläuft.

## Claims

1. A pasteurizer (1) comprising:
an endless circulating transport conveyor (3) guided around deflection rolls (7, 8) and used for transporting through the pasteurizer (1) the products (18) to be pasteurized,
a feed conveyor (5) and/or a discharge conveyor (9) oriented essentially transversely to the conveying direction of the transport conveyor (3) and having a smaller width than the transport conveyor (3), said feed conveyor (5) and/or discharge conveyor (9) being used for transporting the products (18) to and away from the respective end face of the transport conveyor (3), and
a transfer surface (4, 19) for bridging a distance between the conveying surface(s) of the feed conveyor (5) and/or of the discharge conveyor (9) and the conveying surface of the transport conveyor (3),
**characterized in that**
the feed conveyor (5) and/or the discharge conveyor (9) is/are arranged so close to the respective end face of the transport conveyor (3) that the lateral boundary/boundaries (K) thereof, which face(s) the transport conveyor (3), is/are arranged above the contour of the respective deflection roll (7, 8), so that they both overlap when seen in the vertical direction, and that a feed pusher (10) and/or a discharge pusher (14) is/are provided for pushing products (18) on the transfer surface (4, 19), said feed pusher (10) and/or said discharge pusher (14) being designed as rotary pusher(s) whose axis of rotation extends essentially horizontally.

2. A pasteurizer (1) according to claim 1, **characterized in that**, when seen in the conveying direction (20) of the transport conveyor (3), the transfer surface (4, 19) has a width (b) which correspond approximately to a dimension of the product (18) in the conveying direction (20) of the transport conveyor (3).

3. A pasteurizer (1) according to one of the claims 1 or 2, **characterized in that**, when seen in the conveying direction (20) of the transport conveyor (3), the transfer surface (4, 19) has a width (b) between 20 cm and 2 cm, preferably between 15 cm and 3 cm, and even more preferably between 10 cm and 5 cm.

4. A pasteurizer (1) according to one of the claims 1 to 3, **characterized in that** the transfer surface (4, 19) is inclined slightly downwards in the conveying direction.

5. A pasteurizer (1) according to one of the claims 1 to 4, **characterized in that** the rotary pusher (2) comprises at least one, and preferably at least also a second, parallel rod (11a, 11b, 15a, 15b), which is/are arranged essentially transversely to the conveying direction (20) of the transport conveyor (3) and which are adapted to be rotated about a substantially horizontal axis (D).

6. A pasteurizer (1) according to claim 5, **characterized in that** the parallel rod (11a, 11b, 15a, 15b) is held by at least one crossbar (12, 16).

7. A pasteurizer according to at least one of the claims 1 to 6, **characterized in that** the feed pusher (10) and/or the discharge pusher (14) is/are adapted to be driven electro-motively and/or by a servomotor and/or pneumatically and/or hydraulically.

8. A pasteurizer according to one of the claims 1 to 7, **characterized in that** a trigger device is provided for triggering the movement of the feed pusher (10) and/or of the discharge pusher.

9. A pasteurizer according to one of the claims 5 to 8, **characterized in that** the axis (D) extends centrally between the two parallel rods (11a, 11b, 15a, 15b).

## Revendications

1. Dispositif de pasteurisation (1) comportant :
un convoyeur de transport (3) sans fin, guidé sur des cylindres de renvoi (7,8) destiné au transport des produits (18) à pasteuriser par le dispositif de pasteurisation (1),
un convoyeur d'alimentation (5) et/ou un convoyeur d'évacuation (9) pour amener ou respectivement évacuer les produits (18) du côté frontal devant ou à partir du convoyeur de transport (3), orienté essentiellement perpendiculairement à la direction de transport du convoyeur de transport (3) et présentant une largeur plus petite que le convoyeur de transport (3) et
une surface de convoyage (4, 19) destinée à combler un écart entre la surface de convoyage du convoyeur d'alimentation (5) et/ou du convoyeur d'évacuation (9) et la surface de convoyage du convoyeur de transport (3),
**caractérisé en ce que**
le convoyeur d'alimentation (5) et/ou le convoyeur d'évacuation (9) sont disposés en s'étendant de manière si proche du côté frontal du convoyeur de transport (3) que sa limite latérale (K) orientée vers le convoyeur de transport (3) est disposée en s'étendant au-dessus du pourtour du cylindre de renvoi (7, 8), de sorte que tous deux, vus dans la direction verticale, se chevauchent, et qu'un pousseur d'alimentation (10) et/ou un pousseur d'évacuation (14) qui est réalisé en pousseur rotatif dont l'axe de rotation est essentiellement horizontal, est prévu pour pousser des produits (18) sur la surface de transfert (4, 19).

2. Dispositif de pasteurisation (1) selon la revendication 1, **caractérisé en ce que** la surface de transfert (4, 19) dans la direction de transport (20) du convoyeur de transport (3) a une largeur (b) environ égale à une dimension du produit (18) dans la direction de transport (20) du convoyeur de transport (3).

3. Dispositif de pasteurisation (1) selon l'une des revendications 1 et 2, **caractérisé en ce que** la surface de transfert (4, 19) dans la direction de transport (20) du convoyeur de transport (3) présente une largeur (b) comprise entre 20 cm et 2 cm, de préférence entre 15 cm et 3 cm et de manière encore préférée entre 10 cm et 5 cm.

4. Dispositif de pasteurisation (1) selon l'une des revendications 1 à 3, **caractérisé en ce que** la surface de transfert (4, 19) dans la direction de transport est légèrement inclinée vers le bas.

5. Dispositif de pasteurisation (1) selon l'une des revendications 1 à 4, **caractérisé en ce que** le pousseur rotatif (2) comporte au moins une, de préférence au moins une deuxième barre parallèle (11a, 11b, 15a, 15b), qui est disposée essentiellement transversalement à la direction de transport (20) du convoyeur de transport (3) et est capable tourner autour d'un axe (D) essentiellement horizontal.

6. Dispositif de pasteurisation (1) selon la revendication 5, **caractérisé en ce que** la barre parallèle (11a, 11b, 15a, 15b) est maintenue par au moins deux barres transversales (12, 16).

7. Dispositif de pasteurisation selon l'une des revendications 1 à 6, **caractérisé en ce que** le pousseur d'alimentation (10) et/ou le pousseur d'évacuation (14) peuvent être entraînés par moteur électrique et/ou à l'aide d'un servomoteur et/ou pneumatiquement et/ou hydrauliquement.

8. Dispositif de pasteurisation selon l'une des revendications 1 à 7, **caractérisé en ce qu'**un dispositif déclencheur est prévu pour déclencher le mouvement du pousseur d'alimentation (10) et/ou du pousseur d'évacuation.

9. Dispositif de pasteurisation selon l'une des revendications 5 à 8, **caractérisé en ce que** l'axe (D) s'étend au milieu des deux barres parallèles (11a, 11b, 15a, 15b).
